# EUROPEAN PATENT SPECIFICATION

(11) **EP 0 270 259 B1**
(45) Date of publication and mention of the grant of the patent: **01.02.1995**
(21) Application number: 87309898.2
(22) Date of filing: 09.11.1987
(51) Int. Cl.: H04N 1/41, H04N 1/46

(54) **Improvements relating to video signal processing systems**
Videosignalverarbeitungssysteme
Systèmes de traitement de signaux vidéo

(30) Priority: 04.12.1986 GB 8629084; 05.02.1987 GB 8702538
(43) Date of publication of application: 08.06.1988
(73) Proprietor: QUANTEL LIMITED, Newbury Berkshire RG13 2LT (GB)
(72) Inventor: Cawley, Robin Alexander, Ball Hill Berkshire (GB); Hinson, Neil Roy, Newbury Berkshire (GB); Long, Robert James, Blewbury Berkshire (GB); Stapleton, Alan Lewis, Newbury Berkshire (GB)
(74) Representative: Milhench, Howard Leslie

(56) References cited:
- EP-A- 259 695
- FR-A- 2 007 849
- FR-A- 2 382 033
- FR-A- 2 527 876
- US-A- 3 739 082

## Description

The invention relates to an electronic processing apparatus for processing digital image data and to a method of processing digital image data. The invention thus includes systems for processing television video signals for editing purposes and graphics systems for creating, retouching or editing pictures intended to be displayed, televised or printed. In the following the term video signal processing is intended also to include the transmission of video signals.

Video signal processing systems are often designed to process video signals in digital form. For example, in a colour processing system an individual picture point signal, or pixel, may comprise three eight bit binary digital signals representing, say, R.G.B, or Y.U.V, or C.Y.M, components of the pixel. The use of digital video signals facilitates processing and reduces degradation of the information due to noise during the processing. However it limits the number of luminance or colour values which can be represented by the processed signals, depending on the number of bits in the digital signals, and in some cases can produce noticable effects which are undesired. This may happen for example if a gradual change in the luminance or colour value is represented by the digital signals. The digital signals may step from one value to an adjacent value along a line (not necessarily horizontal) in the picture, and remain constant at the new value over a band in the picture until the next step in value occurs. The change in luminance or colours at a step may be small, but nevertheless can be disturbingly perceptible especially if the picture is printed or shown as a still picture on a monitor screen. The steps may have the appearance of contours.

Such effects are particularly undesirable, but unfortunately likely to occur when it is desired to produce a vignetting effect or a so called colour wedge on a printed or displayed picture. To produce such an effect, the luminance or colour value of the picture is required to change gradually from an initial luminance or colour value to an end value over a predetermined distance on the picture. The effect could be produced by specifying two end colours for the wedge, for example dark blue and light blue, and the positions of the beginning and end of the wedge. Signals are generated to produce a line of dark blue at the beginning of the wedge and light blue at the end of the wedge, and lines in between are generated in gradually changing shades of blue with the aid of a computer. Each of the colour component signals may be represented by eight bits, allowing only a limited number of shades, with the result that there are distinct changes in colour between lines, which can result in a stripey display. The problem can be aggravated in printing, as usually fewer colour or luminance steps are available compared with television.

It has been proposed to resolve this problem by adding noise to the digital signals, but the noise tends to cause an unacceptable general deterioration of the picture before the contours or steps are obscured. Furthermore an article entitled "Shaded Computer Graphics in the Entertainment industry" by Franklin C. Crow, University of Texas, published in Computer, March 1978 refers to a 2-D animation system designed at NYIT including an interactive shaded drawing system. An Airbrush can be simulated by scattering random dots of proper colour on the image in a probabilistic distribution around a position sent from a data tablet. The problem discussed in the preceeding paragraphs is not touched upon on this article.

US patents US-A-3739082, US-A-4275411, US-A-4460924, US-A-4568966 and US-A-4652905 describe various systems for dither-quantized signalling for colour television. In these systems, the video components are coarsly quantized before transmission to a receiver. To prevent loss of perceptible picture information in consequence of the course quantisation of the signal amplitude and to minimise visible artefacts, suitable ordered dither is first added to the signal before it is quantized. A black and white picture, for example, transmitted by dithered and coarsely quantized signalling is reproduced having a stippled structure such that a shade of gray intermediately between quantum signal levels is approximated by means of a mixture of dots, some lighter and some darker than the required shade. The dither image is a two dimensional ordered dither pattern which has a rectangular array of dither samples repeating horizontally and vertically over the entire television scanning raster, or may be a three dimensional dither pattern which changes between successive frames of the televised moving picture. Colour components as well as luminance components may be dithered before quantisation and this results in a pointillistically coloured display wherein differently coloured specks or patches are intermingled and give the subjective effect of intermediate colours or shades.

FR-A-2,007,849 and the corresponding GB-A-1,269,093 discloses a system in which raster dots of different sizes are mixed with statistical distribution in order to avoid gradations in density transitions. A picture is represented by a voltage signal and a triangular waveform is applied to the picture signal by way of a biassing circuit.

EP-A-0259695, cited under Article 54(3) EPC during the prosecution of this application, describes a method and apparatus in which image data comprises an integral part and a decimal part. The decimal part is used to compose a random number from which a composite value is derived and compared with a reference value. The integral part of the image data is modified depending on the result of the comparison.

The present invention aims to provide a video signal processing system in which the value of a characteristic of picture points is conveyed by digital signals and in which the danger of undesired visible effects due to the use of digital signals is substantially reduced.

The present invention also aims to provide a system in which a gradual change in luminance or colour can be created without undesired visible contours or steps.

According to one aspect of the invention there is provided an electronic processing apparatus for processing digital image data defining pixels which together represent at least one image, wherein output image data representing each pixel in terms of one of a multi-plicity of available characteristic values is produced from input image data representing each pixel in terms of a desired characteristic value which is defined to an accuracy greater than that of the output data such that the desired characteristic value can be defined as a value between available output characteristic values, the apparatus comprising: a source of input image data defining the desired characteristic value of each pixel in terms of a high order number corresponding to one of said multiplicity of available values and a low order number representing the difference between the desired value and said corresponding available value; generating means for generating data representing a random number; comparing means for comparing the random number with the low order number and for producing a binary output value depending on whether the random number is greater than or less than the low order number; and output means for outputting as the output image data an available characteristic value determined by the high order number and the binary value.

According to another aspect of the invention, there is provided a method of processing digital image data defining pixels which together represent at least one image, wherein output image data representing each pixel in terms of one of a multiplicity of available characteristic values is produced from input image data representing each pixel in terms of a desired characteristic value which is defined to an accuracy greater than that of the output data such that the desired characteristic value can be defined as a value between available output characteristic values, the method comprising: obtaining input image data defining the desired characteristic value of each pixel in terms of a high order number corresponding to one of said multiplicity of available values and a low order number representing the difference between the desired value and said corresponding available value; generating data representing a random number; comparing the random number to the low order number and producing a binary output value depending on whether the random number is greater than or less than the low order number; and outputting as the output image data an available characteristic value determined by the high order number and the binary value.

The above and further features of the invention are set forth with particularity in the appended claims and together with advantages thereof will become clearer from consideration of the following description of preferred embodiments of the invention given with reference to the accompanying drawings, in which:
Figure 1 illustrates a colour graphic system embodying the invention;
Figures 2 and 3 show respective details of operation of the system shown in Figure 1;
Figures 4 and 5 illustrate an effect achievable using the system of Figure 1;
Figures 6 (a) and 6 (b) illustrate the principles of operation of a second embodiment of the invention;
Figure 7 is a schematic diagram of a system comprising the second embodiment;
Figure 8 illustrates the principles of operation of the system shown in Figure 7;
Figure 9 illustrates a prior art system for combining video signals representing two pictures; and
Figure 10 illustrates the application of the invention to the system illustrated in Figure 9.

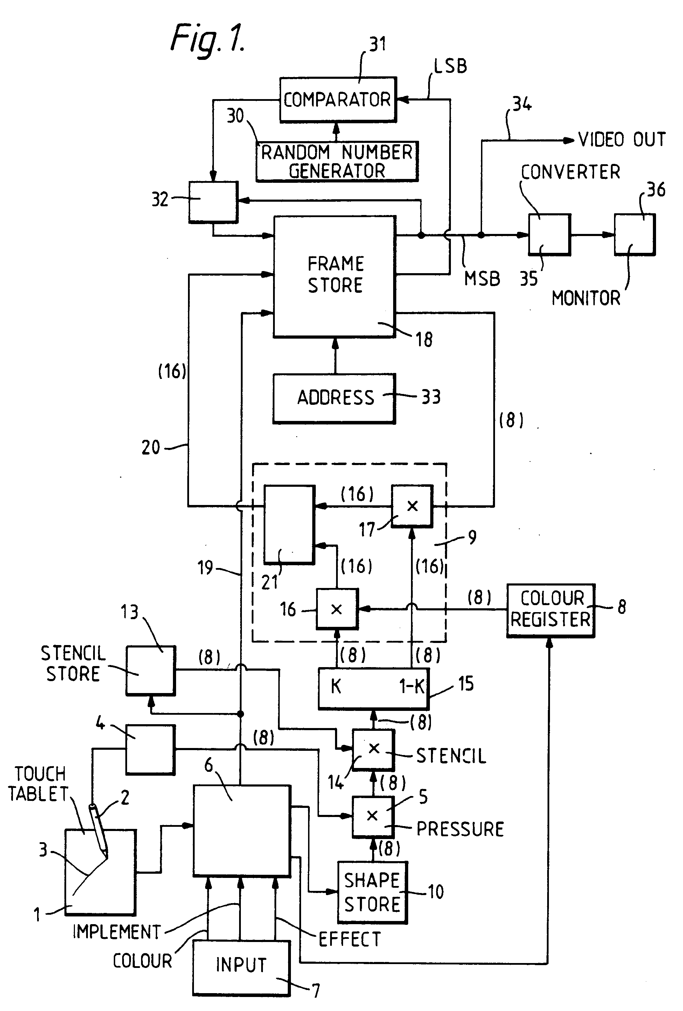

Turning now to Figure 1 of the accompanying drawings the system illustrated therein comprises a colour graphic system. It includes a touch tablet 1, and a stylus 2 which can be moved on the surface of the tablet by an operator to simulate the movement of a graphic implement, such as a brush, over a canvas or paper. The line 3 on the drawing represents, for example, the stroke of the stylus point on the touch tablet, although the stroke would not norrially be visible. The stylus is so constructed that, when manipulated, it generates a signal representing the pressure with which it is applied to the touch tablet and this signal is converted to an eight bit digital signal in a converter 4 and applied as the multiplier to a multiplying circuit 5.

The touch tablet 1 produces signals representing the x and y co-ordinates of successive points on a stroke such as 3, made by moving the stylus over the touch tablet. These signals are applied to a computer 6. Reference 7 represents input means for the computer by which the operator can apply command signals to the computer, representing for example (as indicated on the drawing) the colour which he desires to use, his choice of graphic implement, and an effect he desires to produce. The input means 7 provides a choice of graphic implements including say paint brush, pencil, chalk, or air brush. In this system the invention is operative only when air brush is chosen by the operator (though it could also be applied when other implements or effects are selected, if desired) therefore it will be assumed hereafter that input means 7 has been operated to simulate the use of an air brush.

In response to an input from 7 representing a choice of colour, the computer 6 selects the appropriate colour component signals from a colour register 8, which is the form of a RAM. The component signals may be YUV,CYM or RGB or other sets of signals. The selected colour component signals are input to a processor 9 which processes each colour component signal separately. However the processor for all colour components is similar and the present description will be confined to the operation of the system for one component only. In response to an input signal representing a desired implement the computer applies a signal to a shape RAM 10 to select, for use in the image creation process, a group of signals which define a spatial distribution of drafting medium produced by the selected implement in the vicinity of the point designated, at any particular instant, on the touch tablet 1 by the stylus 2. Various groups of signals for different implements are stored in the RAM 10, but as already indicated it will be assumed that the group for air brush is selected.

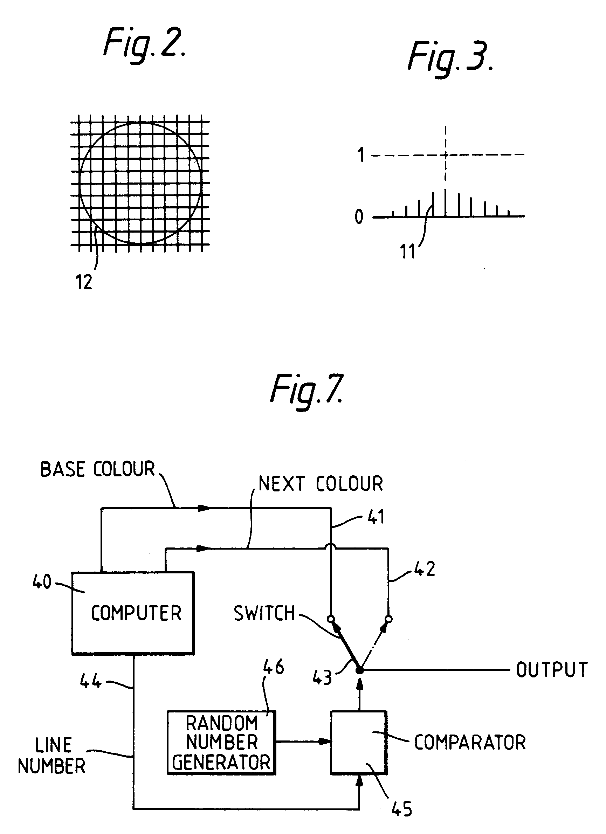

This group may be as represented by figures 2 and 3. In figure 2 a matrix of picture points is represented, for which distribution signals are stored whilst figure 3 represents the value which the distribution signals might have along a central line of the matrix of picture points. The boundary of the distribution area (the so called brush stamp) for the selected implement is represented by the circle 12, and in the case of the air brush the number of picture points included within the stamp could cover an area greater than that indicated. The distribution signals within the boundary have values between 0 and 1, 1 representing maximum distribution. For air brush the distribution is substantially less than 1 even near the centre of the stamp. Outside the brush stamp boundary the distribution signals are zero. As the computer 6 receives signals from the touch tablet 1, representing a point designated by the stylus 2, the shape RAM 12 is caused to apply the distribution signals successively, for all points in the matrix, to the multiplier 5 which multiplies each distribution signal in turn by the pressure signal from the stylus 2.

As already stated the input means 7 allows the operator to choose from among a group of effects and apply an appropriate signal to the computer 6. One such effect is "stencil" and reference 13 denotes the stencil store which is capable of storing a frame of keying signals representing a stencil. For example the keying signal may have unit value for picture points where the stencil is transparent, zero value where the stencil is opaque, and change gradually in marginal area between there two values. When stencil is selected by the input means, the keying signals representing the stored stencil value from addresses in the store 13 identified by the computer 6 are applied to a multiplier 14 which receives from the multiplier 5 the distribution signals multiplied by the stylus pressure. The output from the multiplier 14, for each picture point in the brush stamp 12, is an eight bit control signal K, representing the distribution signal multiplied by the stylus pressure and by the stencil value.

The control signal K is applied to a complementing circuit 15 and to a further multiplier 16. The output of the complementing circuit, which represents (1-K), is applied to yet another multiplier 17.

The second input to the multipler 16 comprises the colour signals selected from the colour register 8 by the computer 6. We are now considering only a representative color component signal, which will be identified as S1. The output of the multiplier 16 for any picture point represents KS1. The second input to the multiplier 17 is the respective colour component value S2 read from a picture frame store 18. The particular picture point read from the frame store at any time is determined by the computer 6 in response to the co-ordinate signals from the touch tablet 1. For each point x,y designated by the touch tablet, the computer generates a sequence of addresses, being those of the matrix points represented in Figure 2, when the brush stamp is located with some reference point at the address x, y. The sequence of addresses generated by the computer 6 is applied to the frame store and also to the stencil store 13 by the read circuit 19 and any signal stored in the frame store 18 or the stencil store 13 is read out to the multiplier 17 or the multiplier 14 as the case may be. Therefore for every picture point in a brush stamp the multiplier 16 delivers an output KS1, representing an input of a selected colour to a picture point selected on the touch tablet. At the same time, the signal S2 from the store 18 representing any colour previously applied to the selected picture point, is multiplied by (1-K) in multiplier 17. As shown the output of the two multipliers 16 and 17 are added in an adding circuit 21 and the resultant KS1 + (1-K) S2 is applied, via a write circuit 20, to the address in the frame store 18 of the picture point in question.

Therefore the newly selected colour is blended at each respective picture point with the old colour thereat, under the control of the signal K, which for any picture point is dependent on the distribution signal from 10, the stylus pressure signal form 4 and the stencil signal from 13. By moving the stylus 2 relative to the touch tablet 1, the operator can cause the signals for sequences of brush stamps to be generated and processed.

As so far described the system illustred in Figure 1 is of the same general construction as the graphic systems which are sold under the trade mark PAINTBOX by the present applicant and described in, for example, British Patent No. B 2140257 and US Patent No 4633416.

As represented in the drawings, the signals from the signal sources 4, 8, 10 and 13 are eight bit binary signals and the signals produced by the multipliers 5 and 14 and by the circuit 15 are also limited to eight bit accuracy. However, when air brush is selected, the multipliers 16 and 17 are arranged to deliver their outputs in sixteen bits, so that they can form the product of the two eight bit inputs without rounding off, and the frame store is arranged to be 16 bits deep. (When implements other than air brush are selected, the eight lower significant bit places in the store 18 can be used for other purposes). Moreover, as indicated in Figure 1, only the eight most significant bits from any picture point addressed by the computer 6, are fed back to the multiplier 17 for combining with a new input. Rounding off in the multipliers 16 and 17 is avoided, when air brush is selected because any one address in the frame store may be accessed many times when processing a stroke such as 3, due to overlapping of successive brush stamps (which are relatively large in the case of the air brush). In addition, a number of passes may be made over the same picture points. Rounding off could therefore result in errors accumulating at various picture points in the frame store 18, which could be significant in relation to the values of the distribution signal and the control signal K which may be quite small for air brush.

Reference 33 denotes a sequential read circuit which reads the picture signals stored in the frame store repeatedly in a suitable raster sequence. The signals so read, which are confined to the eight most-significant bits of the signals in the store even when they are of 16 bits, are applied to utilisation circuit 34, which may be a dot printing circuit or a television transmission channel, and are also applied to a colour monitor 36 via a colour converting circuit. Reading, when effected by the circuit 33, is interleaved with any reading effected during picture creation, and is followed by rewriting. The converting circuit 35 is used to convert the colour components, if necessary, to suit the monitor 36; for example if the colour component signals generated by the circuit are CYM whereas the monitor needs RGB signals.

After each selection of air brush, when another implement is selected, any sixteen bit picture signals in the store 18 are reduced to eight bit before the new selection becomes effective. To achieve this reduction, whilst avoiding the risk of introducing steps or contours due to the coarser quantisation, a dither circuit is added to the system as described. The dither circuit comprises a random number generator 30, which generates 8-bit numbers, a comparator circuit 31 and an adding circuit 32. After use of the air brush the video signals held in the store 18, which will (as stated), be 16 bit signals, are read sequentially in raster format by means of the sequential read circuit 33. The 8 most significant bits MSB which appear in the circuit 31 are applied to an adding circuit 32 and the eight least-significant bits LSB are applied to the comparator circuit 31. In the comparator 31, the LSB are compared with the number which is generated by the random number generator 30 at the relevant time. If the random number is less than or equal to the value of the LSB, 1 is added in the lowest bit place of the MSB by the adding circuit 32. However if the ramdom number is greater than the LSB, no addition is made to the MSB.

The effect of this is to switch the value of the MSB, without order, to cause the MSB to represent, for any one picture point, either a value above or a value below that represented by the original 16 bit video signal. Moreover the probability of the said one value or the said other value occuring for any one picture point is dependent upon the value of the LSB. Dither is thus added to the MSB to reduce the risk of steps or contours appearing when the display is produced by the MSB. The dither is such that over a substantial number of picture points originally represented by the same 16 bit value, there is a high probability that the colours, though differing slightly, will average visually to the correct value when produced by the dithered MSB. It will be noted that the dithered MSB are written back in the framestore 18 in the appropriate storage locations for future use.

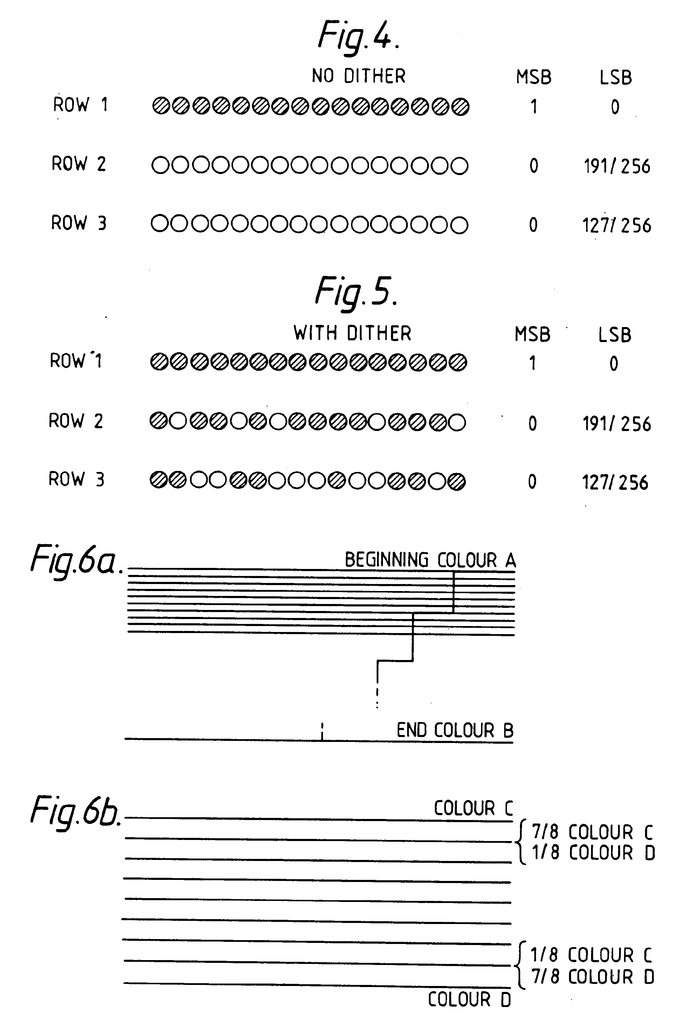

The effect of the dither circuit is illustrated in Figs 4 and 5. The figures show three rows each of nine pixels in a patch of the picture after air brushing. The pixels in row 1 of Fig 4 are shaded to represent that the lowest order bit of the MSB read from the store 18 has value 1, whereas the picture points in rows 2 and 3 are shown blank to represent that this bit has value 0. It is assumed that value represented by the LSB in row one is 0, that in row two is 191/256 and that in row three is 127/256. In fig 4, the shading of the pixels is selected to show the step which will be produced in the respective colours or luminance value by discarding the LSB without using the information contained within them. Figure 5 on the other hand represents the effect of the dither. The number generator 30 generates at random all numbers in the range 0 to 255. At any time when the LSB have the value 191/256, the probability of the random number from the generator 30 being less than or equal to 191 is 3/4. On average therefore at 3 out of 4 picture points in row 2, one will be added in the lowest order bit place of the MSB and the respective video signal will become equal to the video signal for the picture points in row 1.

The remaining 1 in 4 picture points in row two will remain at the original values, with the lowest order MSB equal to zero.

Therefore provided that the patch is big enough, the average value of the video signals for row two will approach the correct colour value. Similarly for row 3, but in this case an average of 1 in 2 video signals will dither to the value of the video signals in row 1. Due to the use of a random number generator, the dither is positionally random and without order and therefore the risk of dot patterning being created in place of steps or contours is small. As the dither is independent of the positional relationship of the picture points, it is effective for steps or contours of different orientations or curvatures.

The inventions can of course be used with other implements, in addition to the air brush, and in other forms of video signal processing circuits. For example the invention is useful in video effect generators for producing colour wedges in colour printing. Figures 6 to 8 illustrate such a generator which produces an output for a colour printing machine to print a colour wedge extending vertically. The electronic signals fed to the printing machine produce signals on the display in the form of an array of dots which vary in area line by line to cause the intensity of the respective colour to vary gradually from bottom to top of the wedge. However, due to the fact that the electronic signals at some point are digitised to form say eight bit digital signals, the number of luminance or colour values which can be represented by the digital signals for any one picture point is limited and the resolution of the printing process is such that a significant number of lines of dots are created between each two adjacent level changes. Consequently the wedge tends to produce unwanted step like changes in luminance or colour and these are clearly visible to the human eye in the printed picture.

The colour wedge as printed may thus have the appearance represented in a very simplified version of a colour wedge as shown in Fig 6a and 6b. The beginning and end of the wedge are defined as colour A and colour B. The number of binary bits used for the video signals is such that between these two colours there are, say, 256 different colour values or levels available each level covering say 8 lines before the step to the next colour level. These numbers will of course vary according to the size of the wedge and the beginning and end colours. On printing, each colour value is determined by selecting dot areas for the printing primaries for the respective line of the wedge.

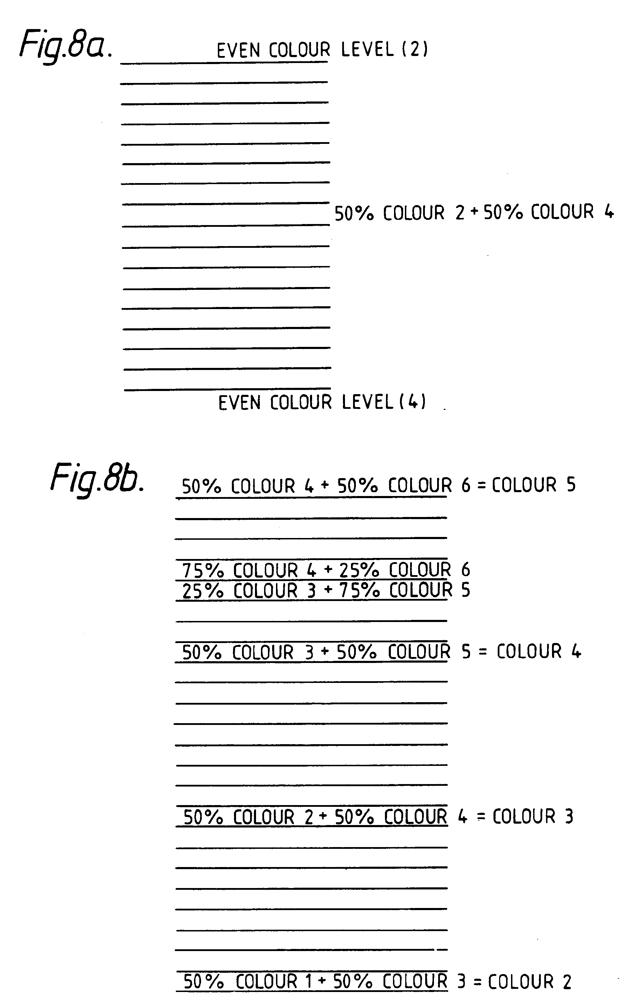

Fig 6a shows the effect described above and Fig 6b shows one step magnified. If we consider the successive colour values C and D as shown in Fig 6b there are 8 lines between the two levels. In prior art systems it was known to change the dot area midway between C and D. In this embodiment of the invention the sharp change between one line of colour C signals and one line of colour D signals is avoided and intervening lines are produced as a mixture of the two colours. The proportions of the mixture are calculated according to the position of the line in the wedge referred to C and D, but the two colour signals are mixed randomly along the line. Considering the example above, the line following colour C will be made up of, say, 7/8 colour C signals and 1/8 colour D signals with the pixels of colour D being interspersed or distributed randomly along the line. The line immediately before level D will have the proportions 7/8 colour D and 1/8 colour C signals.
A circuit for achieving this kind of dither is shown in Figure 7. The beginning and end colours in the wedge are predetermined and a computer 40 generates the addresses required. The computer then makes available at lines 41 and 42 signals representing the start colour and first colour level thereafter. For the first line the switch 3 selects the start colour from line 41 for all dots but the next few lines will be a mixture of the two colours, in this case the start colour which serves as a base colour, and the next colour level. The computer outputs at 44 a number which corresponds to the proportion of the first colour level after the start colour which is to make up the line of signals, this number representing the position of the line between the base colour and the next colour. This will be, say, 1/8th for the first line, 1/4 for the second etc, and it remains unchanged during the time taken to produce the line. This number is compared in a comparator 45 with a number between 0 and 1 generated for each picture point in a line in a random number generator 46. When the fixed number generated by the computer is less than the random number generated in generator 46 a switch 43 operates to select the base colour signal as the video signal for that picture point signal. If the random number for a picture point is less than the fixed number, the next colour level signal will be chosen and so on until a line of signals has been output to the printing machines and to a display. For the next line a new fixed number will be compared with the random number from the generator 46. As in figure 1 the use of the comparator and random number generator ensures that the correct proportions of the two signals make up one line but that the two signals are distributed randomly along that line.

When the next line to be made up of a single colour level signal is reached, the computer operates so that the colour signals which were input at 42 become the base level signal at input 41 and the next level signal is input at 42. For this line of single colour the fixed number is of course zero. In this form of the invention the number provided by the computer when taken with the different colour levels or values provides a desired value for the colour to an accuracy exceeding the colour levels by themselves.

When the video signals are to be printed at full size, the print scanner scans the signals in the image and taking successive patches of, say, four picture point signals produces dots whose size depends on the average of the video signals for these four picture points. The size of the dot used in printing, for each primary, determines the colour at that point in the printed image. Some of the dither will be lost in transferring to print due to averaging but what remains reduces substantially the risk of steps or contours. The range of dot sizes however in printing is smaller than the range of colour levels in video graphics and where two succeeding colour levels are used as in the first embodiment they may in fact approximate to the same dot size and the desired mixing will be lost. A further embodiment of the invention to overcome this problem is shown in Figure 8a.

In this embodiment instead of producing intermediate lines from a mixture of two adjacent colour levels represented by the video signals, alternate colour levels are used. For example as shown in Figure 8a successive dot signals are equated to even video colour levels and odd colour levels are produced as a 50/50 mixture of dots representing the two even colour levels i.e. level 3 will be a 50/50 mixture of level 4 and level 2. The desired result can be achieved by adjusting the signals at 41, 42 and 44 in the Figure 7 arrangement.

This can however produce an optical effect whereby the even colour level lines having no dither, may look different from the other lines and so as a refinement even colour lines may also be produced as a 50/50 mixture of the odd colour level signals (fig 8b). At some point between two colour levels the computer will cause the processing to switch from using two odd colour levels to two even colour levels. This is achieved in exactly the same way as shown in Figure 7 but now input 42 is two levels removed from input 41 and the number output by the computer at 44 must of course be appropriate for the desired colour mixing, i.e the reference colours will at first be colours 1 and 3 and then 2 and 4 and so on.

The numbers used in the above explanation are by way of example only and would in fact depend on many factors such as the size of the colour wedge and the beginning and end colours. The invention is not limited to the details above.

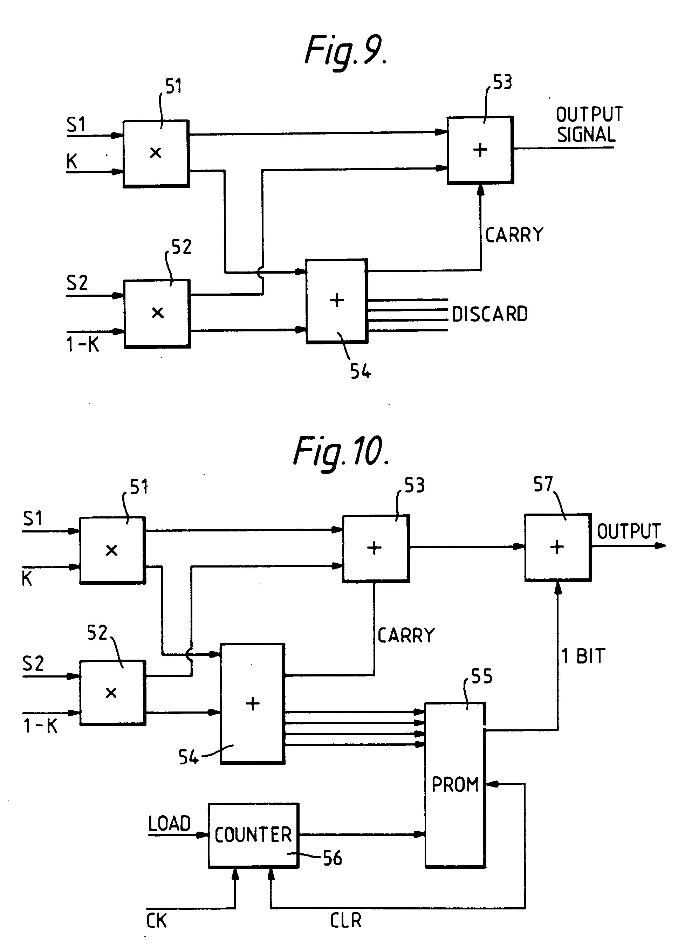

Figure 9 and 10 illustrate the application of the invention to digital video processing systems where signals from more that one source are combined.

Combination of video signals from different sources is a common occurrence in digital video processing both in video editing systems and in video graphics systems. For example in video editing two pictures may be combined so that a figure from one picture may be superimposed on the background of another picture. Problems occur in this combination due to the digital nature of the signals processed particularly over areas of the picture where the luminances of each source are ramped in opposite directions. In this case the resultant signal should be approximately flat i.e. the 'average' of the two, however the nature of rounding errors means that there will be occasional undesired sharp rises and falls in the output signal and these are visible in the picture.

Considering the prior art system shown in Fig. 9 which shows a circuit for combining two video signals S1 and S2. The video signals are provided as 8 bit digital video signals and the processing is done picture point by picture point. A factor K which is an eight bit digital video keying signal is also provided. The K factor provided depends on the type of processing but in the case of superimposing a figure on a background would be a soft edged key signal. In such a case the value of K would vary linearly over several picture points in the area of the picture where soft edging is required. The picture point signal from the first source is input to multiplier 51 where it is multiplied by K. The corresponding picture point signal from the second source is input to multiplier 52 where it is multiplied by (1-K). The multipliers each produce a signal representing the product for each picture point truncated to 12 bits. As the output signal is required to be an 8 bit signal the 8 msb's of the two products are taken to be summed in adder 53 to produce the output signal KS1 + (1-K)S2. There is obviously some loss of information in this process and to try and overcome this to some extent a second adder 54 is provided. The remaining 4 bits of each product are summed in this adder which produces a 4 bit sum and may also produce a carry bit. The carry bit of the output from 54 is applied to adder 53 and is added to the two products of the multipliers. The information contained in the 4 least significant bits of the products will to some extent be taken into account. Unfortunately this does not solve all the problems associated with the digitised and thus quantised nature of the various signals.

However the problem is reduced by switching the lowest order bit in the output signal from the adder 53 to cause said output signal to assume a value either above or below the desired value represented by the sum of the two outputs from the multipliers 51 and 52. The switching is carried out without order by adding a bit at random to the signal output from 53, the probability that a bit is added at any particular picture print being dependent upon the information contained in the lowest order bits of each product.

In Fig 10 the components 51 to 54 are the same as in the prior art system of Figure 9. The processing system according to this embodiment includes additional components which add a bit value randomly with a probability dependent on the values of the four remainder bits from each multiplier 51 and 52 as will be explained later. The weighted random bit value is added to the sum of the video signals and the carry bit, and it reduces the problems with the output signal and produces a smoother looking picture.

As in the Figure 10 arrangement the first video signal S1 is multiplied in multiplier 51 by a factor K producing a 12 bit product KS1. Similarly the multiplier 52 produces a 12 bit product (1-K)S2. The 4 least significant bits of each product are summed in adder 54 producing a 5 bit signal of which the highest order bit is the carry signal. The carry signal is input to adder 53 as before and the remaining 4 bits are input to PROM 55. This PROM is programmed so that it acts as a series of 128 look up tables. The look up tables are programmed so that when taken together all the look up tables contain a random but weighted bit pattern, 16 columns wide (corresponding to the 4 bit remainders) and 128 rows long. Each row constitutes one LUT so that row in the bit pattern is selected by the selection of the LUT. The column is selected by the address within the LUT as will be explained.

A counter 56 operates so that each LUT in the PROM is addressed is sequence. When the 4 bit remainder signal relating to the first picture point, for example, is received the counter is at 0 and the first LUT is addressed, The value of the remainder selects the address within the LUT i.e. selects the column. As an example if the four bit remainder signal relating to the fourth picture point has a value 9 the counter selects the fifth LUT i.e. row 5 and the remainder signal addresses the ninth address in the LUT i.e. column 9. The bit pattern is weighted so that when column 9 is addressed there is a 9/16 chance of there being a 1 in that position. Similarly for column 2 there is a 1/8 chance of addressing a 1 with, however, the ones being dipersed randomly between the rows. Thus, column 9 contains 72 ones (9/16 x 128) distributed randomly in the column; similarly column 8 contains 64 ones distributed randomly, and so on. The signal from the address in the PROM selected by the remainder signal is output to adder 57 where it is added to the sum from adder 53. In this way more information from the remainder signals is used. For example if the five bit sum of the two four bit remainder signals is 1 3/4 then the 1 will go as the carry signal to adder 53 and the 3/4 will select a random bit from the prom with, say, a 3/4 chance that it will be 1. The output signal from the PROM 55 therefore has a degree of randomness but this is weighted as required to take account of the input signals, so that when added to the output signal from the adder 53, the chance of undesired steps in the picture is reduced. Once the LUT has been addressed by the remainder for one picture point, the counter 6 operates in known manner to increase the count by 1 and select the next LUT. If the counter were to continue cycling through the 128 LUT's (i.e. return at the first LUT after 128) a repeated pattern may be detected in the picture because of the high probability of 128 being a multiple or sub multiple of the number of picture points in the scan line length. A second output of the PROM is provided to be input to counter 56 in order to overcome this problem. This output from the PROM serves to clear the counter when a count of 126 has occurred i.e. when LUT 127 has been reached. Since 127 is prime this is much less likely to be a multiple or sub multiple of the scan line. Similar prime values can be selected for greater or smaller numbers of LUTs. This breaks up any patterns that might occur. The counter 56 is also provided with a load input which allows the operator to force the count to a pre-selected "illegal" count (say 127) and address a LUT containing say all 0s in order to disable the switching of the lowest order bit from the circuit 53, when the invention is not required during a particular mode of operation.

It is to be understood that the invention is not limited to the embodiments described here to reducing artefacts as it has general application in any rounding operation on digital signals. For example it may be applied to rounding from 10 bit video, provided by some systems to 8 bit video signals according to the CCIR recommendation 601. It is possible, to increase the number of LUT's used to select the carry signal and also change the number at which the counter clears. The weighting of the bit pattern could also be changed, relative to the remainder. As an alternative to the comparator/incrementor system for producing dither, an adder alone may be used. For example, referring to Fig. 1, the dithered signals may be produced by adding the 8 LSB number from the random number generator 30 to the 16 bit video signal from the store 18 and truncated the result to eight MSB. In this case the adder requires protection from overflow.

## Claims

1. An electronic processing apparatus for processing digital image data defining pixels which together represent at least one image, wherein output image data representing each pixel in terms of one of a multiplicity of available characteristic values is produced from input image data representing each pixel in terms of a desired characteristic value which is defined to an accuracy greater than that of the output data such that the desired characteristic value can be defined as a value between available output characteristic values, the apparatus comprising:
a source (18,20,40,51,52,53,54) of input image data defining the desired characteristic value of each pixel in terms of a high order number corresponding to one of said multiplicity of available values and a low order number representing the difference between the desired value and said corresponding available value;
generating means (30,46,55,56) for generating data representing a random number;
comparing means (31,45,55) for comparing the random number with the low order number and for producing a binary output value depending on whether the random number is greater than or less than the low order number; and
output means (32,43,57) for outputting as the output image data an available characteristic value determined by the high order number and the binary value.

2. An apparatus as claimed in claim 1, wherein said input image data for each pixel comprises an m-bit binary number representing said desired characteristic value, with the most significant n-bits of said m-bit binary number corresponding to said high order number and the least significant m-n bits of said binary number corresponding to said low order number, where m and n are integer numbers and m-n is an integer number greater than one.

3. An apparatus as claimed in claim 1 or 2, wherein said source comprises a drawing processor (20).

4. An apparatus as claimed in any preceding claim, wherein said source comprises a frame store (18).

5. An apparatus as claimed in any preceding claim, wherein said output means comprises an adder (32) for incrementing the corresponding available characteristic value depending on the binary value.

6. An apparatus as claimed in claim 1, wherein said image comprises a plurality of image lines, said source comprises a computer (40) for providing for each pixel a line count number corresponding to said low order number and indicating the line in which said pixel is positioned, and for providing data corresponding to said high order number representing a first available characteristic value and a second available characteristic value adjacent said first available characteristic value.

7. An apparatus as claimed in claim 6, wherein said output means comprises a switch (43) for switching between said first available characteristic value and said second available characteristic value.

8. An apparatus as claimed in any preceding claim, wherein said generating means comprises a random number generator (30,46,55,56).

9. An apparatus as claimed in any preceding claim, wherein said comparing means comprises a comparator (31,45,55).

10. An apparatus as claimed in claim 1, wherein said source comprises a first multiplier (51) for multiplying image data (S1) for a first image by a first weighting factor (K), a second multiplier (52) for multiplying image data (S2) for a second image by a second weighting factor (1-K), said first and second multipliers respectively outputting first and second intermediate data comprising an intermediate high order number and an intermediate low order number, a first adder (54) for adding said first and second intermediate low order numbers to produce a low order sum and a carry which together correspond to said low order number, a second adder (53) for adding said first and second intermediate high order numbers and said carry to produce a high order sum corresponding to said high order number;
said generating means and comparing means comprise a look-up table (55) responsive to the low order sum from the first adder (54) for generating said binary value; and
said output means comprises a third adder (57) for incrementing the high order sum output from the second adder (53) depending on the binary value to produce the output image data.

11. An apparatus as claimed in claim 10, wherein said generating means and said comparing means together comprise an addressable memory (55) containing data representing multiple look-up tables stored at different respective addresses in the memory with each table containing a set of binary data distributed randomly in the table with a probability related to the address at which the table is stored, and a counter (56) for generating address data for selecting a look-up table in the memory (55), and wherein said low order number is applied to the memory so as to select a binary datum from an addressed look-up table as said binary output value.

12. An apparatus as claimed in any preceding claim, wherein said image characteristic comprises the colour of each pixel.

13. A method of processing digital image data defining pixels which together represent at least one image, wherein output image data representing each pixel in terms of one of a multiplicity of available characteristic values is produced from input image data representing each pixel in terms of a desired characteristic value which is defined to an accuracy greater than that of the output data such that the desired characteristic value can be defined as a value between available output characteristic values, the method comprising:
obtaining input image data defining the desired characteristic value of each pixel in terms of a high order number corresponding to one of said multiplicity of available values and a low order number representing the difference between the desired value and said corresponding available value;
generating data representing a random number;
comparing the random number to the low order number and producing a binary output value depending on whether the random number is greater than or less than the low order number; and
outputting as the output image data an available characteristic value determined by the high order number and the binary value.

14. A method as claimed in claim 13, wherein said input image data for each pixel comprises an m-bit binary number representing said desired characteristic value, with the most significant n-bits of said m-bit binary number corresponding to said high order number and the least significant m-n bits of said binary number corresponding to said low order number, where m and n are integer numbers and m-n is an integer number greater than one.

15. An method as claimed in claim 13 or 14, wherein said outputting of output image data comprises incrementing the corresponding available characteristic value depending on the binary value.

16. A method as claimed in claim 13, wherein said image comprises a plurality of image lines, the method comprising providing for each pixel a line count number indicating the line in which said pixel is positioned, which line count number comprises said low order number; and
providing data corresponding to said high order number representing a first available characteristic value and a second available characteristic value.

17. A method as claimed in claim 16, wherein said outputting comprises switching between said first available characteristic value and said second available characteristic value.

18. A method as claimed in claim 13, wherein said obtaining input image data comprises multiplying image data (S1) for a first image by a first weighting factor (K) to obtain first intermediate data, multiplying image data (S2) for a second image by a second weighting factor (1-K) to obtain second intermediate data, said first and second intermediate data comprising an intermediate high order number and an intermediate low order number, adding said first and second intermediate low order numbers to produce a low order sum and a carry which together correspond to said low order number, and adding said first and second intermediate high order numbers and said carry to produce a high order sum corresponding to said high order number;
said generating and comparing comprise referencing a look-up table depending on a generated count and the low order sum from the first adder in order to generate said binary value; and
said outputting comprises incrementing the high order sum depending on the binary value to produce the output image data.

## Patentansprüche

1. Elektronische Verarbeitungsanordnung zur Verarbeitung von digitalen Bilddaten, welche zusammen wenigstens ein Bild repräsentierende Bildpunkte definieren, wobei Ausgangsbilddaten, welche jeden Bildpunkt in Form eines Wertes einer Vielzahl von verfügbaren charakteristischen Werten repräsentieren, aus Eingangsbilddaten erzeugt werden, die jeden Bildpunkt in Form eines gewünschten charakteri-stischen Wertes repräsentieren, welcher mit einer Genauigkeit definiert ist, die größer als die der Ausgangsdaten ist, so daß der gewünschte charakteristische Wert als ein Wert zwischen verfügbaren charakteristischen Ausgangswerten definiert werden kann, umfassend
eine Quelle (18, 20, 40, 51, 52, 53, 54) für Eingangsbilddaten, welche den gewünschten charakteristischen Wert jedes Bildpunktes in Form einer Zahl hoher Ordnung, die einem Wert der Vielzahl von charakteristischen Werten entspricht, sowie einer Zahl geringer Ordnung, welche die Differenz zwischen dem gewünschten Wert und dem entsprechenden verfügbaren Wert repräsentiert, definieren;
Generatormittel (30, 46, 55, 56) zur Erzeugung von eine willkürliche Zahl repräsentierenden Daten;
Vergleichsmittel (31, 45, 55) zum Vergleich der willkürlichen Zahl mit der Zahl geringer Ordnung sowie zur Erzeugung eines binären Ausgangswertes, der davon abhängt, ob die willkürliche Zahl größer oder kleiner als die Zahl geringer Ordnung ist; und
Ausgangsmittel (32, 43, 57) zur Ausgabe eines verfügbaren charakteristischen Wertes, der durch die Zahl hoher Ordnung und den Binärwert festgelegt ist, als Ausgangsbilddaten.

2. Anordnung nach Anspruch 1, in der die Eingangsbilddaten für jeden Bildpunkt eine den gewünschten charakteristischen Wert repräsentierende Binärzahl mit m Bit umfassen, wobei die n höchstwertigen Bits der Binärzahl mit m Bits der Zahl hoher Ordnung und die geringstwertigen m - n Bits der Binärzahl der Zahl geringer Ordnung entsprechen und wobei m und n ganze Zahlen und m - n eine ganze Zahl größer Eins sind.

3. Anordnung nach Anspruch 1 oder 2, in der die Quelle einen Zeichnungsprozessor (20) umfaßt.

4. Anordnung nach den vorhergehenden Ansprüchen, in der die Quelle einen Bildspeicher (18) umfaßt.

5. Anordnung nach den vorhergehenden Ansprüchen, in der die Ausgangsmittel einen Addierer (32) zur Inkrementierung des entsprechenden vom Binärwert abhängigen verfügbaren charakteristischen Wertes umfassen.

6. Anordnung nach Anspruch 1, in der das Bild eine Vielzahl von Bildzeilen umfaßt und die Quelle einen Rechner (40) umfaßt, der für jeden Bildpunkt eine Zeilenzählzahl liefert, die der Zahl geringer Ordnung entspricht und die Zeile anzeigt, in welcher der Bildpunkt angeordnet ist, und Daten liefert, die der Zahl hoher Ordnung entsprechen und einen ersten verfügbaren charakteristischen Wert sowie einen zweiten verfügbaren charakteristischen Wert benachbart zum ersten verfügbaren charakteristischen Wert repräsentieren.

7. Anordnung nach Anspruch 6, in der die Ausgangsmittel einen Schalter (43) zur Umschaltung zwischen dem ersten verfügbaren charakteristischen Wert und dem zweiten verfübaren charakteristischen Wert umfassen.

8. Anordnung nach den vorhergehenden Ansprüchen, in der die Generatormittel einen Zufallsgenerator (30 46, 55, 56) umfassen.

9. Anordnung nach den vorhergehenden Ansprüchen, in der die Vergleichsmittel einen Komparator (31, 45, 55) umfassen.

10. Anordnung nach Anspruch 1, in der die Quelle einen ersten Multiplizierer (51) zur Multiplikation von Bilddaten (S1) für ein erstes Bild mit einem ersten Wichtungsfaktor (K), einen zweiten Multiplizierer (52) zur Multiplikation von Bilddaten (S2) für ein zweites Bild mit einem zweiten Wichtungsfaktor (1-K), wobei der erste und zweite Multiplizierer erste bzw. zweite Zwischendaten ausgeben, welche eine Zwischenzahl hoher Ordnung und eine Zwischenzahl geringer Ordnung umfassen, einen ersten Addierer (54) zum Addieren der ersten und zweiten Zwischenzahl geringer Ordnung zwecks Erzeugung einer Summe geringer Ordnung und eines Übertrags, welche zusammen der Zahl geringer Ordnung entsprechen, sowie einen zweiten Addierer (53) zur Addition der ersten und zweiten Zwischenzahl hoher Ordnung und des Übertrags zwecks Erzeugung einer Summe hoher Ordnung entsprechend der Zahl hoher Ordnung umfaßt;
die Generatormittel und die Vergleichsmittel eine auf die Summe geringer Ordnung vom ersten Addierer (54) ansprechende Nachschlagetabelle (55) zur Erzeugung des Binärwertes umfassen; und
die Ausgangsmittel einen dritten Addierer (57) zur Inkrementierung der Summenausgangsgröße hoher Ordnung vom zweiten Addierer (53) in Abhängigkeit vom Binärwert zwecks Erzeugung der Ausgangsbilddaten umfassen.

11. Anordnung nach Anspruch 10, in der die Generatormittel und die Vergleichsmittel zusammen einen adressierbaren Speicher (55), der Daten enthält, welche mehrfache an unterschiedlichen jeweiligen Adressen im Speicher gespeicherte Nachschlagetabellen repräsentieren, wobei jede Tabelle einen Satz von Binärdaten enthält, der willkürlich in der Tabelle mit einer Wahrscheinlichkeit verteilt ist, die auf die Adresse, an der die Tabelle gespeichert ist, bezogen ist, sowie einen Zähler (56) zur Erzeugung von Adreßdaten zwecks Auswahl einer Nachschlagetabelle im Speicher (55) umfassen und in der die Zahl geringer Ordnung in den Speicher eingegeben wird, um ein Binärdatum aus einer adressierten Nachschlagetabelle als binären Ausgangswert auszuwählen.

12. Anordnung nach den vorhergehenden Ansprüchen, in der das Bildcharakteristikum die Farbe jedes Bildpunktes umfaßt.

13. Verfahren zur Verarbeitung von digitalen Bilddaten, welche zusammen wenigstens ein Bild repräsentierende Bildpunkte definieren, bei dem Ausgangsbilddaten, welche jeden Bildpunkt in Form eines Wertes einer Vielzahl von verfügbaren charakteristischen Werten repräsentieren, aus Eingangsbilddaten erzeugt werden, die jeden Bildpunkt in Form eines gewünschten charakteristischen Wertes repräsentieren, der mit einer Genauigkeit definiert ist, welche größer als diejenige der Ausgangsdaten ist, so daß der gewünschte charakteristische Wert als ein Wert zwischen verfügbaren charakteristischen Ausgangswerten definiert werden kann, bei dem
Eingangsbilddaten erhalten werden, welche den gewünschten charakteristischen Wert jedes Bildpunktes in Form einer Zahl hoher Ordnung entsprechend einem Wert der Vielzahl von verfügbaren Werten und einer Zahl geringer Ordnung, welche die Differenz zwischen dem gewünschten Wert und dem entsprechenden verfügbaren Wert repräsentiert, definieren;
eine willkürliche Zahl repräsentierende Daten erzeugt werden;
die willkürliche Zahl mit der Zahl geringer Ordnung verglichen und ein binärer Ausgangswert in Abhängigkeit davon erzeugt wird, ob die willkürliche Zahl größer oder kleiner als die Zahl geringer Ordnung ist; und
als Ausgangsbilddaten ein verfügbarer charakteristischer Wert ausgegeben wird, der durch die Zahl hoher Ordnung und den Binärwert festgelegt ist.

14. Verfahren nach Anspruch 13, bei dem die Eingangsbilddaten für jeden Bildpunkt eine den gewünschten charakteristischen Wert repräsentierende Binärzahl mit m Bit umfassen, wobei die höchstwertigen n Bit der Binärzahl mit m Bit der Zahl hoher Ordnung und die geringstwertigen m-n Bit der Binärzahl der Zahl geringer Ordnung entsprechen und wobei m und n ganze Zahlen und m-n eine ganze Zahl größer Eins sind.

15. Verfahren nach Anspruch 13 oder 14, bei dem die Ausgabe der Ausgangsbilddaten die Inkrementierung des entsprechenden verfügbaren charakteristischen Wertes in Abhängigkeit von dem Binärwert umfaßt.

16. Verfahren nach Anspruch 13, bei dem das Bild eine Vielzahl von Bildzeilen umfaßt und für jeden Bildpunkt eine Zeilenzählzahl erzeugt wird, welche die Zeile, in welcher der Bildpunkt angeordnet ist, anzeigt und die Zahl geringer Ordnung umfaßt; und
der Zahl hoher Ordnung entsprechende Daten erzeugt werden, welche einen ersten verfügbaren charakteristischen Wert und einen zweiten verfügbaren charakteristischen Wert repräsentieren.

17. Verfahren nach Anspruch 16, bei dem die Ausgabe die Umschaltung zwischen dem ersten verfügbaren charakteristischen Wert und dem zweiten verfügbaren charakteristischen Wert umfaßt.

18. Verfahren nach Anspruch 13, bei dem die Bereitstellung von Eingangsbilddaten die Multiplikation von Bilddaten (S1) für ein erstes Bild mit einem ersten Wichtungsfaktor (K) zur Gewinnung von ersten Zwischendaten, die Multiplikation von Bilddaten (S2) für ein zweites Bild mit einem zweiten Wichtungsfaktor (1-K) zur Gewinnung zweiter Zwischendaten, wobei die ersten und zweiten Zwischendaten eine Zwischenzahl hoher Ordnung und eine Zwischenzahl geringer Ordnung umfassen, die Addition der ersten und zweiten Zwischenzahl geringer Ordnung zwecks Erzeugung einer Summe geringer Ordnung und eines Übertrags, welche zusammen der Zahl geringer Ordnung entsprechen, sowie die Additon der ersten und zweiten Zwischenzahl hoher Ordnung und des Übertrags zur Erzeugung einer Summe hoher Ordnung entsprechend der Zahl hoher Ordnung umfaßt;
die Erzeugung und der Vergleich die Bezugnahme auf eine Nachschlagetabelle in Abhängigkeit von einer erzeugten Zählung und der Summe geringer Ordnung vom ersten Addierer zur Erzeugung des Binärwertes umfassen; und
die Ausgabe die Inkrementierung der Summe hoher Ordnung in Abhängigkeit vom Binärwert zur Erzeugung der Ausgangsbilddaten umfaßt.

## Revendications

1. Un appareil électronique de traitement destiné à traiter une donnée numérique d'image définissant des pixels qui représentent ensemble au moins une image, dans lequel une donnée d'image de sortie représentant chaque pixel en termes d'une valeur dans une multiplicité de valeurs caractéristiques disponibles est produite à partir d'une donnée d'image d'entrée qui représente chaque pixel en termes d'une valeur caractéristique souhaitée qui est définie avec une précision supérieure à celle de la donnée de sortie d'une manière telle que la valeur caractéristique souhaitée peut être définie en tant que valeur parmi des valeurs caractéristiques disponibles de sortie, l'appareil comprenant:
une source (18, 20, 40, 51, 52, 53, 54) de donnée d'image d'entrée, définissant la valeur caractéristique souhaitée de chaque pixel en termes d'un nombre d'ordre élevé correspondant à l'une des valeurs de ladite multiplicité des valeurs disponibles et d'un nombre d'ordre inférieur représentant la différence entre la valeur souhaitée et ladite valeur disponible correspondante;
un moyen générateur (30, 46, 55, 56) pour engendrer une donnée représentant un nombre aléatoire;
un moyen comparateur (31, 45, 55) pour comparer le nombre aléatoire d'ordre inférieur et pour produire une valeur binaire de sortie qui varie selon que le nombre aléatoire est supérieur ou inférieur au nombre d'ordre inférieur;
un moyen de sortie (32, 43, 57) pour sortir en tant que donnée d'image de sortie une valeur caractéristique disponible déterminée par le nombre d'ordre élevé et la valeur binaire.

2. Un appareil selon la revendication 1, dans lequel ladite image d'entrée de chaque pixel comprend un nombre binaire à n bits qui représente ladite valeur caractéristique souhaitée, les m bits de poids fort dudit nombre binaire à m bits correspondant audit nombre d'ordre élevé et les m-n bits de poids faible dudit nombre binaire correspondant audit nombre d'ordre inférieur, où n et m sont des nombres entiers et m-n est un nombre entier supérieur à un.

3. Un appareil selon la revendication 1 ou 2 dans lequel ladite source comprend un processeur de traçage (20).

4. Un appareil selon une revendication précédente quelconque dans lequel ladite source comprend une mémoire principale 18.

5. Un appareil selon une revendication précédente quelconque, dans lequel ledit moyen de sortie comprend un additionneur (32) pour incrémenter la valeur caractéristique disponible correspondante en fonction de la valeur binaire.

6. Un appareil selon la revendication 1 dans lequel ladite image comprend une série de lignes d'image, ladite source comprenant un ordinateur (40) pour fournir pour chaque pixel un numéro de compte de ligne correspondant audit nombre d'ordre inférieur et indiquant la ligne dans laquelle ledit pixel est additionné, et pour fournir une donnée correspondant audit nombre d'ordre élevé représentant une première valeur caractéristique et une deuxième valeur caractéristique disponible adjacente à ladite première valeur caractéristique disponible.

7. Un appareil selon la revendication 6, dans lequel ledit moyen de sortie comprend un commutateur (43) pour commuter entre ladite première valeur caractéristique disponible et ladite deuxième valeur caractéristique disponible.

8. Un appareil selon une revendication précédente quelconque dans lequel ledit moyen générateur comprend un générateur (30, 46, 55, 56) de nombres aléatoires.

9. Un appareil selon une revendication précédente quelconque, dans lequel ledit moyen comparateur comprend un comparateur (31, 45, 55).

10. Un appareil selon la revendication 1, dans lequel ladite source comprend un premier multiplicateur (51) pour multiplier une donnée d'image (S1) pour une première image par un premier facteur de pondération (K), un deuxième multiplicateur (52) pour multiplier une donnée d'image (S2) d'une deuxième image par un deuxième facteur de pondération (1-K), lesdits premier et deuxième multiplicateurs produisant respectivement une première et une deuxième données intermédiaires comprenant un nombre intermédiaire d'ordre élevé et un nombre intermédiaire d'ordre inférieur, un premier additionneur (54) pour additionner lesdits premier et deuxième nombres intermédiaires d'ordre inférieur afin de produire une somme d'ordre inférieur et un report qui correspondent ensemble audit nombre d'ordre inférieur, un deuxième additionneur (53) pour additionner lesdits premier et deuxième nombres intermédiaires d'ordre élevé et ledit report afin de produire une somme d'ordre élevé correspondant audit nombre d'ordre élevé;
ledit moyen générateur et ledit moyen comparateur comprennent une table (55) qui répond à la somme d'ordre inférieur venant du premier additionneur (54) pour engendrer ladite valeur binaire; et
ledit moyen de sortie comprend un troisième additionneur (57) pour incrémenter en fonction de la valeur binaire la sortie de somme d'ordre supérieur venant du deuxième additionneur (53) de façon à produire la donnée d'image de sortie.

11. Un appareil selon la revendication 10, dans lequel ledit moyen générateur et ledit moyen comparateur comprennent ensemble une mémoire adressable (55) contenant une donnée représentant de multiples tables mémorisées dans la mémoire à des adresses différentes respectives, chaque table contenant un ensemble de données binaires réparties de façon aléatoire dans la table selon une probabilité liée à l'adresse à laquelle la table est mémorisée, et un compteur (56) pour engendrer une donnée d'adresse de manière à choisir une table de la mémoire (55), et dans lequel ledit nombre d'ordre inférieur est appliqué à la mémoire de façon à choisir en tant que valeur binaire de sortie une donnée binaire dans une table adressée.

12. Un appareil selon une revendication précédente quelconque, dans lequel ladite caractéristique d'image comprend la couleur de chaque pixel.

13. Un procédé de traitement d'une donnée numérique d'image définissant des pixels qui représentent ensemble au moins une image, dans lequel une donnée d'image de sortie représentant chaque pixel en termes d'une valeur dans une multiplicité de valeurs caractéristiques disponibles est produite à partir d'une donnée d'image d'entrée qui représente chaque pixel en termes d'une valeur caractéristique souhaitée qui est définie avec une précision supérieure à celle de la donnée de sortie d'une manière telle que la valeur caractéristique souhaitée peut être définie en tant que valeur parmi des valeurs caractéristiques disponibles de sortie, le procédé comprenant les étapes consistant à:
obtenir une donnée d'image d'entrée, définissant la valeur caractéristique souhaitée de chaque pixel en termes d'un nombre d'ordre élevé correspondant à l'une des valeurs de ladite multiplicité des valeurs disponibles et d'un nombre d'ordre inférieur représentant la différence entre la valeur souhaitée et ladite valeur disponible correspondante;
engendrer une donnée représentant un nombre aléatoire;
comparer le nombre aléatoire d'ordre inférieur et pour produire une valeur binaire de sortie qui varie selon que le nombre aléatoire est supérieur ou inférieur au nombre d'ordre inférieur;
sortir en tant que donnée d'image de sortie une valeur caractéristique disponible déterminée par le nombre d'ordre élevé et la valeur binaire.

14. Un procédé selon la revendication 13, dans lequel ladite image d'entrée de chaque pixel comprend un nombre binaire à n bits qui représente ladite valeur caractéristique souhaitée, les m bits de poids fort dudit nombre binaire à m bits correspondant audit nombre d'ordre élevé et les m-n bits de poids faible dudit nombre binaire correspondant audit nombre d'ordre inférieur, où n et m sont des nombres entiers et m-n est un nombre entier supérieur à un.

15. Un procédé selon la revendication 13 ou 14, dans lequel ladite étape de sortie de la donnée d'image de sortie comprend une incrémentation de la valeur caractéristique disponible correspondante en fonction de la valeur binaire.

16. Un procédé selon la revendication 13, dans lequel ladite image comprend une série de lignes d'image, le procédé comprend la fourniture, pour chaque pixel, d'un numéro de compte de ligne indiquant la ligne dans laquelle ledit pixel est additionné, ce compte de ligne comprenant ledit nombre d'ordre inférieur; et
et la fourniture d'une donnée correspondant audit nombre d'ordre élevé représentant une première valeur caractéristique et une deuxième valeur caractéristique disponible.

17. Un procédé selon la revendication 16, dans lequel ladite étape de sortie comprend une commutation entre ladite première valeur caractéristique disponible et ladite deuxième valeur caractéristique disponible.

18. Un procédé selon la revendication 13, dans lequel ladite étape d'obtention d'une image d'entrée comprend les étapes consistant à: multiplier une donnée d'image (S1) pour une première image par un premier facteur de pondération (K) pour obtenir une première donnée intermédiaire, multiplier une donnée d'image (S2) d'une deuxième image par un deuxième facteur de pondération (1-K) pour obtenir une deuxième donnée intermédiaire, lesdites première et deuxième données intermédiaires comprenant un nombre intermédiaire d'ordre élevé et un nombre intermédiaire d'ordre inférieur, additionner lesdits premier et deuxième nombres intermédiaires d'ordre inférieur afin de produire une somme d'ordre inférieur et un report qui correspondent ensemble audit nombre d'ordre inférieur, et additionner lesdits premier et deuxième nombres intermédiaires d'ordre élevé et ledit report afin de produire une somme d'ordre élevé correspondant audit nombre d'ordre élevé;
lesdites étapes de génération et de comparaison comprennent l'étape consistant à se référencer à une table en fonction d'un compte engendré et de la somme d'ordre inférieur venant du premier additionneur de manière à engendrer ladite valeur binaire; et
ladite étape de sortie comprend une incrémentation de la somme d'ordre supérieur en fonction de la valeur binaire de façon à produire la FOdonnée d'image de sortie.
